# EUROPÄISCHE PATENTANMELDUNG

(11) **EP 0 870 972 A2**
(43) Veröffentlichungstag der Anmeldung: **14.10.1998**
(21) Anmeldenummer: 98106204.5
(22) Anmeldetag: 04.04.1998
(51) Int. Cl.: F16M 1/00

(54) **Zweiteiliges Gehäuse und Verfahren zu seiner Fertigung**

(30) Priorität: 11.04.1997 DE 19715016
(71) Anmelder: FLENDER-HIMMELWERK GMBH, D-72072 Tübingen (DE)
(72) Erfinder: Böing, Georg, 72108 Rottenburg (DE); Stoll, Robert, 72070 Tübingen (DE); Schnurr, Wolfgang, 72147 Nehren (DE); Schaupp, Hans-Albert, 72108 Rottenburg (DE)
(74) Vertreter: Radünz, Ingo, Dipl.-Ing.

(57) **Zusammenfassung**

Ein zweiteiliges Gehäuse ist mit mehreren koaxial durch die beiden Gehäuseteile (1, 2) geführten Bohrungen (3, 4) versehen. Jede Bohrung (3, 4) ist in jedem Gehäuseteil (1, 2) konzentrisch von einer Zentrierung umgeben, die in dem einen Gehäuseteil als Innenzentrierung und in dem anderen Gehäuseteil als Außenzentrierung ausgeführt ist. Diese Bohrungen (3, 4) werden in jedem Gehäuseteil (1, 2) mit der sie konzentrisch umgebenden Zentrierung in einem Arbeitsgang mit einem Bohrwerkzeug hergestellt, das zwei jeweils auf den Durchmesser der Bohrung und der Zentrierung abgestimmte Schneiden (8, 9, 10) aufweist. Anschließend werden die mit den Bohrungen (3, 4) und den Zentrierungen versehenen Gehäuseteile (1, 2) so zusammengefügt, daß die Zentrierungen paßgenau ineinander greifen.

## Beschreibung

Die Erfindung betrifft ein zweiteiliges Gehäuse mit den Merkmalen des Oberbegriffes des Anspruches 1 und ein Verfahren zu seiner Fertigung.

Derartige Gehäuse werden bevorzugt als Getriebegehäuse verwendet, wobei die koaxialen Bohrungen eine ein Getrieberad tragende Welle aufnehmen, die in beiden Gehäuseteilen gelagert ist. Zu diesem Zweck müssen die beiden Gehäuseteile so zueinander positioniert werden, daß die Achsen der koaxialen Bohrungen eine sehr hohe Positionsgenauigkeit zueinander aufweisen. Die Positionsgenauigkeit wird bisher durch eine Paßstiftverbindung realisiert. Dabei werden zunächst die Gehäuseteile vorbearbeitet, gemeinsam verschraubt und danach die Stiftbohrungen und die weiteren Bohrungen gefertigt. Dieses Verfahren bedingt einen sehr hohen Fertigungsaufwand und muß zudem noch durch das Verschrauben der Gehäuseteile unterbrochen werden.

Es sind Bohrwerkzeuge bekannt (DE-PS 36 10 016, DE-PS 41 20 436), die mehrere Schneidplatten unterschiedlichen Durchmessers in einem axialen Abstand voneinander aufweisen. Mit diesen Bohrwerkzeugen lassen sich in einem Arbeitsgang Stufenbohrungen herstellen.

Der Erfindung liegt die Aufgabe zugrunde, das gattungsgemäße zweiteilige, mit koaxialen Bohrungen versehene Gehäuse so zu gestalten und zu fertigen, daß eine hohe Positionsgenauigkeit bei vermindertem Fertigungsaufwand erreicht wird.

Diese Aufgabe wird bei einem gattungsgemäßen Gehäuse erfindungsgemäß durch die kennzeichnenden Merkmale des Anspruches 1 gelöst. Vorteilhafte Ausgestaltungen der Erfindung sind Gegenstand der Unteransprüche. Ein Verfahren zur Fertigung des Gehäuses ist in dem Anspruch 5 angegeben.

Die Gehäuseteile des erfindungsgemäß gestalteten Gehäuses lassen sich getrennt voneinander fertigen und anschließend aufgrund der als Innenzentrierung und Außenzentrierung ausgebildeten Zentrierung paßgenau ineinander fügen. Durch die Verwendung eines mit zwei Schneiden versehenen Bohrwerkzeuges wird die Bohrung und die Zentrierung in jedem getrennt gefertigten Gehäuseteil mit hoher Genauigkeit ausgeführt.

Ein Ausführungsbeispiel der Erfindung ist in der Zeichnung dargestellt und wird im folgenden näher erläutert. Es zeigen:
- Fig. 1: den Längsschnitt durch zwei Gehäuseteile eines zweiteiligen Gehäuses,
- Fig. 2: die Ansicht auf ein Gehäuseteil in Blickrichtung X,
- Fig. 3 und 4: den Längsschnitt durch jeweils ein Bohrwerkzeug.

Das dargestellte Gehäuse, das vorzugsweise ein Getriebegehäuse ist, ist zweiteilig ausgeführt und besteht aus den Gehäuseteilen 1, 2. Diese Gehäuseteile 1, 2 sind in der Zeichnung im auseinander gerückten Zustand gezeigt. Das Gehäuse ist mit zwei Bohrungen 3, 4 versehen, die beide dazu bestimmt sind, eine nicht gezeigte Welle aufzunehmen, die ein Getrieberad aufnimmt. Die Welle wird in beiden Gehäuseteilen gelagert, so daß die Achse A der oberen Bohrung 3 mit dem Durchmesser D_{A} in dem linken Gehäuseteil 1 und die Achse A' der oberen Bohrung 3 mit dem gleich großen Durchmesser D_{A'} in dem rechten Gehäuseteil 2 koaxial liegen. In der gleichen Weise sind die Achse B der unteren Bohrung 4 mit dem Durchmesser D_{B} in dem linken Gehäuseteil 1 und die Achse B' der unteren Bohrung 4 mit dem gleich großen Durchmesser D_{B'} in dem rechten Gehäuseteil 2 koaxial zueinander ausgerichtet.

Um die beiden Gehäuseteile 1, 2 mit einer sehr hohen Positionsgenauigkeit der Achsen A - A' und B - B' zueinander zusammenfügen zu können, ist jede Bohrung 3, 4 konzentrisch von einer kreis- oder kreisbogenförmigen Zentrierung umgeben. Die die Bohrungen 3, 4 in dem rechten Gehäuseteil 2 umgebenden Zentrierungen mit den Durchmessern Z_{A'} und Z_{B'} sind als Außenzentrierungen ausgebildet und bilden einen Vorsprung 5. In dem linken Gehäuseteil 1 sind die Zentrierungen als Innenzentrierungen mit den Durchmessern Z_{A} und Z_{B} ausgeführt und bilden eine dem Vorsprung 5 angepaßte Ausnehmung 6, in die der Vorsprung 5 mit Paßsitz eingefügt werden kann. Abweichend von der Zeichnung kann der rechte Gehäuseteil 2 mit Innenzentrierungen und der linke Gehäuseteil 1 mit Außenzentrierungen versehen sein. Auch ist es möglich, z. B. in dem rechten Gehäuseteil 2 die Bohrung 3 mit einer Außenzentrierung und die Bohrung 4 mit einer Innenzentrierung zu umgeben. Dementsprechend würde in dem linken Gehäuseteil 1 die Bohrung 3 von einer Innenzentrierung und die Bohrung 4 von einer Außenzentrierung umgeben sein.

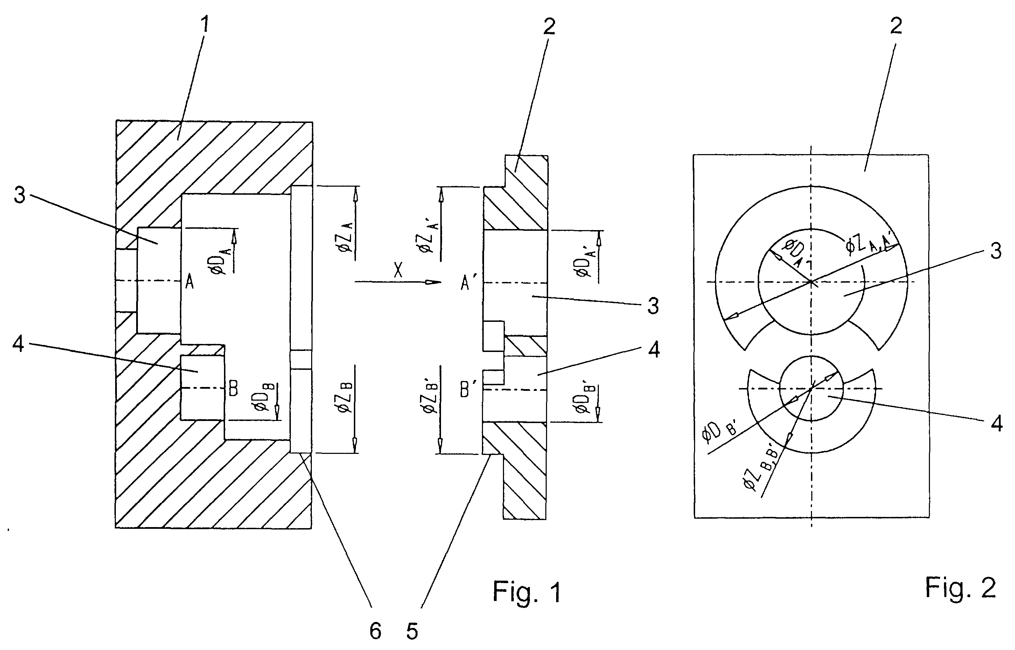

Die die Bohrungen 3, 4 umgebenden Zentrierungen können sich über einen vollen Kreisumfang erstrecken. Dabei kann es je nach dem Durchmesser der Zentrierungen möglich sein, daß sich die Zentrierungen teilweise überlappen und bei der Fertigung in den sich überlappenden Bereichen zerstört werden. Wie aus der Fig. 2 zu erkennen ist, können sich die Zentrierungen auch nur über einen Kreisbogen erstrecken und als Segmente auf den Gehäuseteilen 1, 2 positioniert sein.

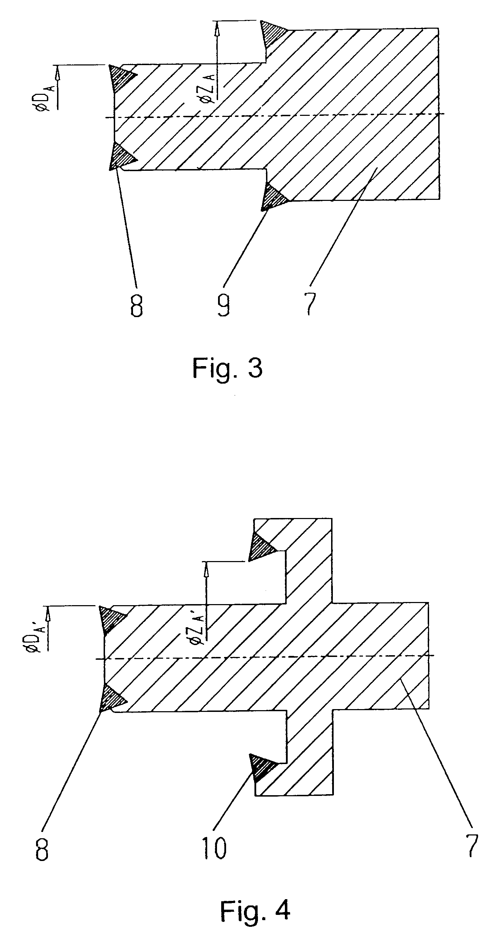

Für die Fertigung der Bohrung 3 in dem Gehäuseteil 1 ist das Bohrwerkzeug nach Fig. 3 bestimmt. Dieses Bohrwerkzeug besteht aus einem Schaft 7, an dessen Spitze eine erste Schneide 8 angebracht ist. Die Schneide 8 weist einen Außendurchmesser auf, der dem Durchmesser D_{A} der Bohrung 3 entspricht. In einem Abstand von der Spitze ist der Schaft 7 des Bohrwerkzeuges mit einer zweiten Schneide 9 bestückt, deren Außendurchmesser dem Durchmesser Z_{A} der die Bohrung 3 umgebenden Innenzentrierung entspricht. Der Abstand der Schneidkante der ersten Schneide 8 von der Schneidkante der zweiten Schneide 9 entspricht dem Abstand des Grundes der Bohrung 3 von dem Grund der Ausnehmung 6. Das in Fig. 4 dargestellte Bohrwerkzeug ist ähnlich aufgebaut. Auch in diesem Fall ist eine erste Schneide 8 vorhanden, deren Außendurchmesser dem Durchmesser D_{A'} der Bohrung 3 in dem rechten Gehäuseteil 2 entspricht. Die zweite Schneide 10 ist jedoch als Hohlbohrer ausgebildet und weist einen Innendurchmesser auf, der dem Außendurchmesser Z_{A'} der die Bohrung 3 umgebenden Außenzentrierung entspricht.

Die Fertigung des Gehäuses erfolgt in der Weise, daß mit Hilfe des in Fig. 3 dargestellten Bohrwerkzeuges in dem Gehäuseteil 1 die Bohrung 3 und im gleichen Arbeitsgang die diese Bohrung 3 umgebende Innenzentrierung hergestellt wird. Mit einem ähnlichen, jedoch den vorgegebenen Abmessungen angepaßten Bohrwerkzeug wird die Bohrung 4 und sie umgebenden Innenzentrierung gefertigt. Getrennt von der Fertigung des Gehäuseteiles 1 wird das Gehäuseteil 2 gefertigt, indem mit Hilfe des in Fig. 4 dargestellten Bohrwerkzeuges die Bohrung 3 und die sie umgebende Außenzentrierung in einem Arbeitsgang herstellt wird. Mit einem ähnlichen, jedoch den vorgegebenen Abmessungen angepaßten Bohrwerkzeug wird die Bohrung 4 und sie umgebenden Außenzentrierung gefertigt. Anschließend werden beide Gehäuseteile 1, 2 so zusammengefügt, daß die Außenzentrierungen in die Innenzentrierungen greifen. Da zwei Bohrungen 3, 4 vorgesehen sind und jede dieser Bohrungen 3, 4 mit einer Innen- bzw. Außenzentrierung versehen ist, ergibt sich für die Gehäuseteile 1, 2 insgesamt eine zweifache Zentrierung. Da die Bohrungen 3, 4 und die Zentrierungen jeweils mit einem Werkzeug gefertigt werden, entsteht eine hohe Positionsgenauigkeit beider Elemente. Das Zusammenfügen der Gehäuseteile über die Zentrierungen ergibt somit eine sehr hohe Positionsgenauigkeit der Achsen A - A' und B - B' zueinander. Durch das gleichzeitige Fertigen von Bohrung und Zentrierung entsteht kein zusätzlicher Fertigungsaufwand.

## Patentansprüche

1. Zweiteiliges Gehäuse, das mehrere Bohrungen (3, 4) und zwei Gehäuseteile (1, 2) aufweist, wobei jede Bohrung (3, 4) koaxial in beiden Gehäuseteilen (1, 2) verläuft, dadurch gekennzeichnet, daß jede Bohrung (3, 4) in jedem Gehäuseteil (1, 2) konzentrisch von einer Zentrierung umgeben ist, die in dem einen Gehäuseteil als Innenzentrierung und in dem anderen Gehäuseteil als Außenzentrierung ausgeführt ist und die paßgenau ineinander greifen.

2. Gehäuse nach Anspruch 1, dadurch gekennzeichnet, daß die Zentrierungen als Segmente auf den Gehäuseteilen (1, 2) ausgeführt sind.

3. Gehäuse nach Anspruch 1 oder 2, dadurch gekennzeichnet, daß alle Innenzentrierungen in dem einen Gehäuseteil und alle Außenzentrierungen in dem anderen Gehäuseteil angeordnet sind.

4. Gehäuse nach Anspruch 1 oder 2, dadurch gekennzeichnet, daß in einem Gehäuseteil sowohl Innenzentrierungen als auch Außenzentrierung und in dem anderen Gehäuseteil die entsprechenden Innenzentrierungen bzw. Außenzentrierungen angebracht sind.

5. Verfahren zum Fertigen eines zweiteiligen Gehäuses, mit koaxial durch die Gehäuseteile (1, 2) geführten Bohrungen (3, 4) nach den Ansprüchen 1 bis 4, dadurch gekennzeichnet, daß in jedem Gehäuseteil (1, 2) jede Bohrung (3, 4) mit einer sie konzentrisch umgebenden, als Innen- bzw. Außenzentrierung ausgebildeten Zentrierung in einem Arbeitsgang mit einem Bohrwerkzeug hergestellt wird, das zwei jeweils auf den Durchmesser der Bohrung und der Zentrierung abgestimmte Schneiden (8, 9, 10) aufweist und daß anschließend die mit den Bohrungen (3, 4) und den Zentrierungen versehenen Gehäuseteile (1, 2) so zusammengefügt werden, daß die Zentrierungen ineinander greifen.
